# EUROPEAN PATENT APPLICATION

(11) **EP 4 852 369 A1**
(43) Date of publication of application: **09.12.2026**
(21) Application number: 25180464.7
(22) Date of filing: 03.06.2025
(51) Int. Cl.: H04L 9/08, H04L 9/32, H04L 9/30

(54) **METHOD AND SYSTEM FOR ESTABLISHING A SECURE COMMUNICATION CONNECTION BETWEEN A DEVICE AND A BACKEND-SERVER**

(71) Applicant: Siemens Aktiengesellschaft, 80333 München (DE)
(72) Inventor: Bauer, Sven, 85591 Vaterstetten (DE); De Santis, Fabrizio, 80634 München (DE)
(74) Representative: Siemens Patent Attorneys

(57) **Abstract**

The present invention refers to a method and a system for establishing a secure communication connection between a device and a backend-server comprising: generating during a setup phase by the backend-server a KEM key pair for a key pair encapsulation mechanism comprising a KEM public key and a KEM secret key, wherein the KEM public key is sent by the backend-server to a production server and generating during the setup-Phase by the production server a signature key pair for a signature scheme comprising a signature public key and a signature secret key, wherein the signature public key is sent by the production server to the backend-server; encapsulating during a production phase by the production server the KEM public key received from the backend-server to produce a secret key and a cipher text, wherein the produced cipher text is signed by the production server with the signature secret key to produce a signature, wherein the produced secret key, the produced cipher-text and the produced signature are sent by the production server to the device and stored in the device and sending during a field phase where the device is deployed in the field the cipher-text and the signature stored in the device to the backend-server for verification by the backend-server and verifying during the field phase by the backend-server the signature of the cipher-text received by the backend-server from the device using the signature public key received by the backend-server from the production server and if the verification of the received signature is performed successfully decapsulating by the backend-server the received cipher text with the KEM secret key of the generated KEM key pair to obtain the secret key shared by the backend-server and the device to derive symmetric keys for establishment of the secure communication connection between the device and the backend-server.

## Description

The present invention relates to a method and to a system for establishing a secure communication connection between a device and a backend-server and in particular to an efficient and post-quantum symmetric key establishment without a backend key database.

Resource-constrained devices such as Internet of Thing (IoT) devices have to establish a secure connection with a backend server. However, difficulties with establishing this connection arise mainly for the following reasons. Resource-constrained devices have limited storage and computing power. This limits the type of cryptographic operations these devices can perform to secure a connection with a backend server. These devices target price-sensitive applications, so simply using more powerful devices is not an option.

A number of conventional methods address the establishment of a secure communication connection between a resource- constrained devices and a backend-server. Usage of one single symmetric key for all devices allows for small cryptographic keys and a computationally inexpensive system which may provide security against quantum attacks. However extracting the single symmetric key from one device breaks security for all devices. Using different symmetric key for each device has the disadvantage of requiring a complex key management, i.e. a database of all keys needs to be maintained on a backend.

Usage of interactive key encapsulation mechanisms (KEMs) provides post-quantum security, if a post-quantum KEM is used. However usage of an interactive key encapsulation mechanism KEM requires the support of computationally expensive asymmetric cryptography on the device and an expensive data exchange between the device and the backend server which cannot be offered by most resource constrained devices.

Usage of a static Diffie-Hellman (DH) algorithm with off-device pre-computation avoids breaking of security for all devices when a single key is extracted and does not require a complex key management, however using a static Diffie-Hellman algorithm is not suitable for post-quantum cryptography.

Against this background, a problem addressed by the method and system according to the present invention is that of establishing a secure communication between a resource constrained device and a backend server which is also suitable for post-quantum cryptography.

This problem is solved according to the invention by a method having the features of claim 1 and/or by a system having the features of claim 11.

The invention provides according to a first aspect a method for establishing a secure communication connection between a device and a backend-server comprising:
generating during a setup phase (PH-SETUP) by the backend-server a KEM key pair for a key pair encapsulation mechanism comprising a KEM public key and a KEM secret key, wherein the KEM public key is sent by the backend-server to a production server and generating during the setup-Phase by the production server a signature key pair for a signature scheme comprising a signature public key and a signature secret key, wherein the signature public key is sent by the production server to the backend-server;
encapsulating during a production phase (PH-PROD) by the production server the KEM public key received from the backend-server to produce a secret key and a cipher text, wherein the produced cipher text is signed with the signature secret key to produce a signature, wherein the produced secret key, the produced cipher-text and the produced signature are sent by the production server (P-SERV) to the device and stored in the device; and
sending during a field phase (PH-FIELD) where the device is deployed in the field the cipher-text and the signature stored in the device to the backend-server for verification by the backend-server and verifying during the field phase by the backend-server the signature of the cipher-text received by the backend-server from the device using the signature public key received by the backend-server from the production server and if the verification of the received signature is performed successfully decapsulating by the backend-server the received cipher text with the KEM secret key of the generated KEM key pair to obtain the secret key shared by the backend-server and the device to derive symmetric keys for establishment of the secure communication connection between the device and the backend-server.

The method according to the present invention can comprise a protocol to establish a symmetric key between a device and a backend server using state-of-the-art post-quantum cryptography and without the need of maintaining a large database of keys.

Post-quantum cryptography refers to the development of cryptographic algorithms and particularly public-key algorithms that are secure against cryptographic attacks by a quantum computer. Post-quantum cryptography may ultimately replace pre-quantum public-key algorithms such as RSA or ECC. In the transition phase from pre-quantum cryptography to post-quantum cryptography, a transitioning of devices to post-quantum algorithms is required.

A key encapsulation mechanism (KEM) is a mechanism that utilizes a public-key algorithm to securely encapsulate and exchange symmetric key material, i.e. transmit a shared secret using a cipher text. The shared secret may be used as input to a key derivation function. The transmitted value is called KEM Cipher Text. It can be used by both parties to derive the same symmetric key (with a high probability). This derived symmetric key can be then used to protect messages or data exchanged (depending on the symmetric algorithm, protection can include integrity and/or confidentiality protection, i.e., not only encryption.

The method according to the present invention provides a low-cost solution, in particular in terms of key sizes and speed of cryptographic operations). This can be achieved using symmetric cryptography on the device. The resource-constrained devices are usually deployed in large numbers. This implies that the management of the cryptographic keys becomes complex and possibly expensive. An advantage of the method according to the present invention is that it does not involve a complex key management. There is no need for maintaining a large database of device keys since the keys are stored only on the devices (each device stores a different key).

In view of the imminent transition to post-quantum cryptography, the method according to the present invention provides the additional advantage that it is compatible with new standard post-quantum cryptographic schemes. The method of the present invention can be implemented to be post-quantum secure. The production server and the backend server can employ state-of-the-art post-quantum cryptography algorithms, while the devices employ symmetric cryptography only.

With the method according to the present invention only the backend server and the production servers have to support post-quantum cryptography. This is an advantage during the transition to post-quantum cryptography because servers are typically much easier to update than devices deployed in the field.

A significant advantage of the method of the present invention is that it is suitable for resource-constrained devices. The method employs only symmetric cryptography on the device side, hence it is not computationally expensive and requires only a small amount of data to be exchanged between the device and the backend server. Since the method employs only symmetric cryptography on the device side it does not require an expensive Encaps () procedure of a KEM and requires only a small amount of data to be exchanged between the device and the backend server.

Advantageous configurations and developments emerge from the further dependent claims and from the description with reference to the figures of the drawings.

In a possible embodiment of the method for establishing a secure communication connection between a device and a backend-server according to the present invention the obtained secret key is replaced by another second secret key. This increases the security of the method against attacks. Replacement of the secret key can be performed in regular time intervals or event driven.

In a possible embodiment of the method for establishing a secure communication connection between a device and a backend-server according to the present invention the production server sends during an augmented setup phase (PH-SETUP-AUGMENTED) additionally also the signature secret key of the generated signature key pair to the backend server.

In a possible embodiment of the method for establishing a secure communication connection between a device and a backend-server according to the present invention the backend server encapsulates during an augmented field phase the KEM public key of the generated KEM key pair to output the second secret key and a second cipher text.

In a possible embodiment of the method for establishing a secure communication connection between a device and a backend-server according to the present invention the backend server signs during the augmented field phase the second cipher text using the signature secret key received from the production server to output a second signature.

In a possible embodiment of the method for establishing a secure communication connection between a device and a backend-server according to the present invention the backend server encrypts during the augmented field phase the second secret key using the first secret key to output a third cipher text.

In a possible embodiment of the method for establishing a secure communication connection between a device and a backend-server according to the present invention the backend server transmits during the augmented field phase the third cipher text, the second cipher text and the second signature as a tuple to the device.

In a possible embodiment of the method for establishing a secure communication connection between a device and a backend-server according to the present invention the device decrypts during the augmented field phase the third cipher text using the first secret key to output the second secret key.

In a possible embodiment of the method for establishing a secure communication connection between a device and a backend-server according to the present invention the device stores the second secret key, the second cipher text and the second signature as a tuple in a local memory of the device. The tuple is stored at least temporarily in a storage of the device. The local storage can comprise a trusted tamper proof data memory of the device.

In a possible embodiment of the method for establishing a secure communication connection between a device and a backend-server according to the present invention the produced cipher text is signed during the production phase by the production server to produce the signature.

In a possible embodiment of the method for establishing a secure communication connection between a device and a backend-server according to the present invention the produced cipher text is signed during the production phase by a dedicated signing server to produce the signature.

In a possible embodiment of the method for establishing a secure communication connection between a device and a backend-server according to the present invention the used signature scheme comprises ECDSA, EdDSA, ML-DSA, FN-DSA, SLH-DSA, CRYSTALS-Dilithium or Falcon. Usage of other signature schemes is possible.

In a possible embodiment of the method for establishing a secure communication connection between a device and a backend-server according to the present invention the key encapsulation mechanism (KEM) comprises , RSA- KEM, HQC, ML-KEM, CRYSTALS-Kyber, Classic McEliece, FrodoKEM and/or post-quantum cryptography algorithms. Usage of other key encapsulation mechanism KEM is possible.

In a possible embodiment of the method for establishing a secure communication connection between a device and a backend-server according to the present invention the encryption algorithm and the decryption algorithm used in the augmented filed phase comprise Authenticated Encryption with Associated Data (AEAD) encryption/decryption algorithms.

The invention further provides according to a further aspect a system for establishing a secure communication connection between a device and a backend-server of the system adapted to perform the method according to the first aspect of the present invention. The method according to the present invention can be implemented by distributed software components and/or hardware components of the system interacting with each other via a network. The method can at least partially be computer-implemented,

The invention further provides according to a further aspect a backend server for establishing a secure communication connection with a plurality of devices deployed in the field using the method according to the first aspect of the present invention.

The invention further provides according to a further aspect a production server adapted generates a key pair for a signature scheme used by the method according to the first aspect of the present invention.

The invention further provides according to a further aspect a device deployed in the field and adapted to establish a secure communication connection with a backend server using the method according to the first aspect of the present invention. The device can comprise a resource-constrained device with limited processing capabilities and limited memory capacities. The device can comprise an internet of things device.

Where appropriate, the above-mentioned configurations and developments can be combined implementations can be combined with each other as desired, as far as this is reasonable. Further possible configurations, developments and implementations of the invention also include combinations, which are not explicitly mentioned, of features of the invention which have been described previously or are described in the following with reference to the embodiments. In particular, in this case, a person skilled in the art will also add individual aspects as improvements or supplements to the basic form of the present invention.

The present invention is described in greater detail in the following on the basis of the embodiments shown in the schematic figures of the drawings, in which:
- Fig. 1: shows a diagram for illustrating a setup phase of a method according to the present invention;
- Fig. 2: shows a diagram for illustrating a production phase of a method according to the present invention;
- Fig. 3: shows a diagram for illustrating a field phase of a method according to the present invention;
- Fig. 4: shows a diagram for illustrating an augmented field phase of a method according to the present invention;
- Fig. 5: shows a diagram for illustrating iterations of an augmented field phase of a method according to the present invention;
- Fig. 6: shows a diagram for illustrating an embodiment of a method according to the present invention;
- Fig. 7: shows a diagram for illustrating a further embodiment of a method according to the present invention;

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

In the drawings, like, functionally equivalent and identically operating elements, features and components are provided with like reference signs in each case, unless stated otherwise.

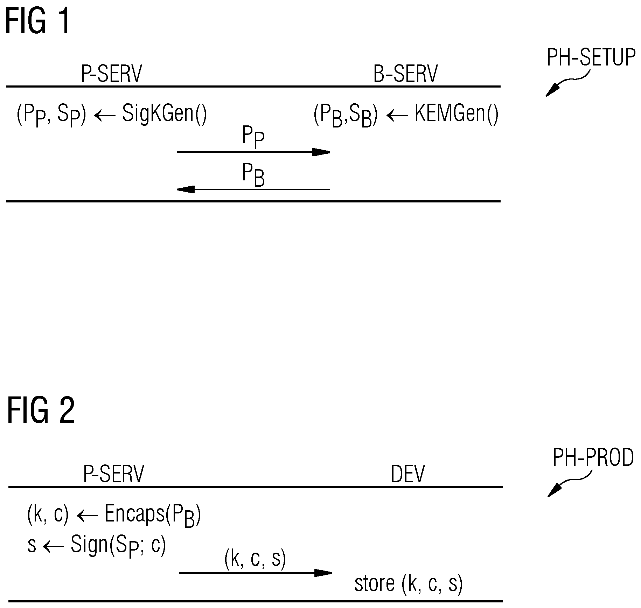

The following parties are involved in the method and system according to the present invention as also illustrated in the signaling diagrams of Fig. 1 to Fig.7 showing the interaction between a Backend-Server B-SERV, a Production Server P-SERV and a device DEV.

The backend server B-SERV is adapted to provide some functionality for a device DEV deployed in the field. The production server P-SERV is adapted to provide the device key material during production of the device DEV. The device DEV is produced and subsequently deployed in the field.

The method according to the present invention for establishing a secure communication connection between a device DEV and a backend-server B-SERV comprises in preferred embodiment several phases (PH).The method according to the present invention comprises in a preferred embodiment three phases PH including a setup-phase PH-SETUP, a production phase PH-PROD and a field phase PH-FIELD as shown in Figs. 1 to 3.

During a setup phase (PH-SETUP) as illustrated in Fig.1 a KEM key pair for a key pair encapsulation mechanism (KEM) comprising a KEM public key PB and a KEM secret key SB is generated by a backend-server B-SERV of a backend of the system. The generated KEM public key PB is then sent by the backend-server B-SERV to a production server P-SERV of the system.

During the setup phase PH-SETUP a signature key pair for a signature scheme comprising a signature public key PP and a signature secret key SP is generated by the production server P-SERV. The generated signature public key PP is then sent by the production server P-SERV to the backend-server B-SERV.

As illustrated in the diagram of Fig.1 during the setup phase PH-SETUP, the production server P-SERV generates a key pair for a (post- quantum) signature scheme. This key pair consists of a public key PP and a secret key SP. The backend server B-SERV generates during the setup phase PH-SETUP a key pair for a (post-quantum) key encapsulation mechanism KEM. This key pair consists of a public key PB and a secret key SB as also shown in Fig.1.

The production server P-SERV and the backend server B-SERV send each other during the setup phase PH-SETUP their respective public keys PP, PB in a trusted way as also illustrated in Fig. 1. The connection between the production server P-SERV and the backend server B-SERV can be assumed to be secure. There are many well-known methods to achieve this and hence securing this connection is out of scope. The setup phase PH-SETUP takes place only once (for all devices DEV) in a trusted environment between the production server P-SERV and the backend server B-SERV as illustrated in Fig.1.

During a subsequent production phase (PH-PROD) of the method as illustrated in Fig.2 the KEM public key PB received from the backend-server B-SERV is encapsulated by the production server P-SERV to produce a secret key (k) and a cipher text (c). The produced cipher text c is signed by the production server P-SERV or by a dedicated signing server with the signature secret key SP to produce a signature (s). The produced secret key k, the produced cipher-text c and the produced signature s are subsequently sent by the production server P-SERV as a tuple (k, c, s) to the device DEV and stored in the device DEV.

During the production phase PH-PROD, the production server P-SERV encapsulates the public KEM key PB of the backend server B-SERV as illustrated schematically in Fig. 2. This produces a shared secret k and a cipher-text c. The production server P-SERV signs the produced cipher-text c with its secret key SP (Sign (SP; c)). This produces a signature s. The production server P-SERV transmits the secret key k, the produced cipher-text c and the produced signature s to the device DEV as shown in Fig. 2. The device DEV stores the received secret key k, the received cipher-text c and the received signature s as also shown in figure Fig. 2. The production phase PH-PROD takes place only once (for each device DEV) in a trusted environment between the production server P-SERV and a device DEV as illustrated in Fig. 2.

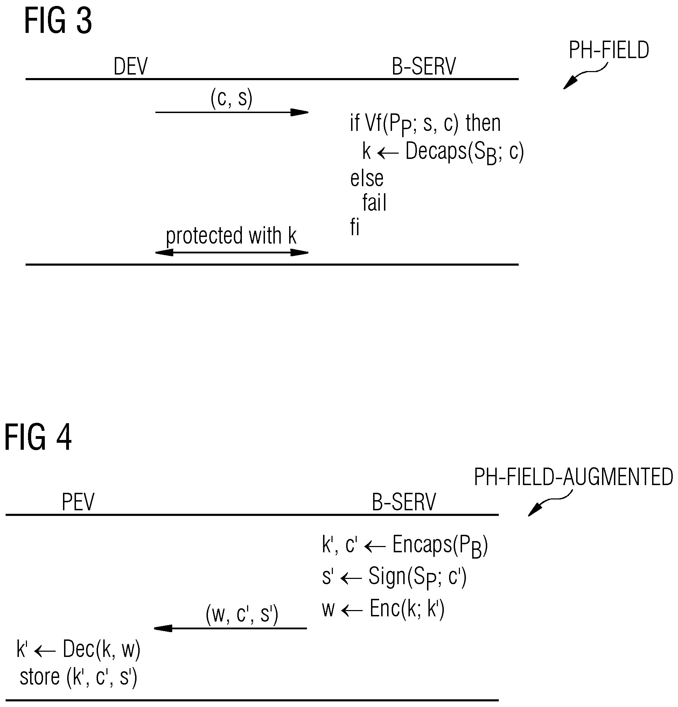

During a field phase (PH-FIELD) as illustrated in Fig. 3 where the device DEV is deployed in the field the cipher-text (c) and the signature (s) stored in the device DEV are sent to the backend-server B-SERV for verification by the backend-server B-SERV. During the field phase PH-FIELD the signature s of the cipher-text c received by the backend-server B-SERV from the device DEV undergoes a verification procedure by the backend-server B-SERV using the signature public key PP received by the backend-server B-SERV from the production server P-SERV. If the verification of the received signature s is performed successfully the received cipher text c is decapsulated by the backend-server B-SERV with the KEM secret key SB of the generated KEM key pair to obtain the secret key k. The obtained secret key k is shared by the backend-server B-SERV and the device DEV to derive symmetric keys for establishment of the secure communication connection between the device DEV and the backend-server B-SERV. In the field phase PH-FIELD a device DEV connects securely to a backend server B-SERV by establishing a shared secret k between the device DEV and the backend server B-SERV as illustrated in Fig.3.

When the device DEV is deployed during the field phase PH-FIELD in the field and wants to establish a connection with the backend server B-SERV, it sends the stored cipher-text c and the stored signature s to the backend-server B-SERV as illustrated in Fig.3. The backend server B-SERV verifies the received signature s of the received cipher-text c using the verification algorithm (Vf (PP;s ; c)) as illustrated in Fig.3. If the verification passes, then the backend server B-SYS decapsulates the received cipher text c with its secret key SB (Decaps (SB; c)) and thus obtains the secret k. Now both the device DEV and the backend server B-SERV share the secret k and can use this to derive symmetric keys, e.g., for authentication and encryption using a key derivation function KDF.

A fail routine can terminate the protocol or perform alternative actions to invalidate the correct execution of the protocol, e.g., generate a random key k that does not match the key used on the device DEV.

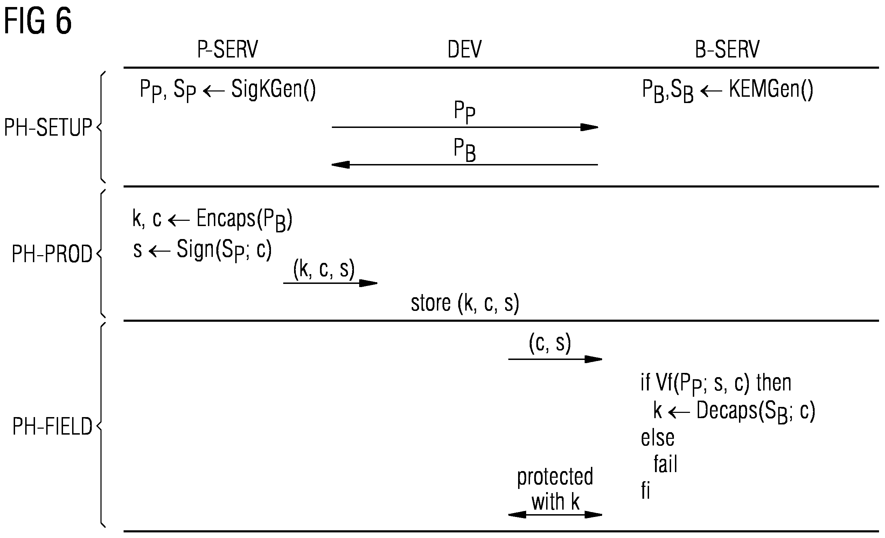

A full version of an embodiment of the method according to the present invention is depicted in Fig. 6 including the different phases PH illustrated in Figs. 1 to 3.

The signature scheme employed by the method according to the present invention can in possible embodiment comprise three different algorithms, i.e. a key generation algorithm SigKGen, a signing algorithm Sign and a verification algorithm Vf.

The signature scheme comprises a key generation algorithm SigKGen that outputs a public key P and a secret key S. One can denote calls to this key generation algorithm as (P, S) ← SigKGen() as also illustrated in Fig.1.

The signature scheme further comprises a signing algorithm Sign that, given a secret key S generated by the key generation algorithm SigKGen and given a message M outputs a signature s. One can denote calls to this signing algorithm algorithm as s ← Sign(S; M) as also illustrated in Fig.2.

The signature scheme further comprises a verification algorithm Vf that, given a public key P, a signature s and a message M verifies that s is a signature of M under the secret key S corresponding to the public key P as also illustrated in Fig.3.

The key encapsulation mechanism (KEM) employed by the method according to the present invention can comprise in a possible embodiment the following three algorithms including a key generation algorithm KEMKGen, an encapsulation algorithm Encaps and a decapsulation algorithm Decaps.

The key encapsulation mechanism KEM comprises a key generation algorithm KEMKGen that outputs a public key P and a secret key S. One can denote calls to this algorithm as (P, S) ← KEMKGen().

The key encapsulation mechanism KEM further comprises an encapsulation algorithm that, given a public key P outputs a shared secret k and a ciphertext c. One can denote calls to this algorithm as (k, c) ← Encaps (P).

The key encapsulation mechanism KEM further comprises a decapsulation algorithm that, given a secret key S and a ciphertext c that has been produced by Encaps(P) outputs the same shared secret k as Encaps (P). One can denote calls to this algorithm as k ← Decaps (S; c).

In a possible embodiment of the method according to the present invention different instances of signature schemes (ECDSA, EdDSA, ML-DSA, FH-DSA, CRYSTALS-Dilithium, Falcon, ...) and of key encapsulation mechanisms KEMs (e.g., RSA- KEM, ML-KEM, CRYSTALS-Kyber, Classic McEliece, FrodoKEM, ...), including post-quantum cryptography algorithms, as standardized at NIST can be used. Similarly different instances of AEAD such as AES-GCM, ChaCha20-Poly1305, etc. can be employed by the method according to the present invention. The method can employ any of them, including hybrid variants.

An attacker who obtains the secret key k may decrypt all data secured with the secret key k. Hence, the protocol of the embodiment illustrated in Fig.6 does not achieve perfect forward secrecy, which is a desirable property in modern communication protocols. Therefore, in a possible embodiment of the method according to the present invention the secret key k is replaced with a new key k' at regular intervals in order to achieve forward secrecy. This requires the backend server B-SERV to keep track of the symmetric key material currently in use with each device DEV, so that a main advantage of the method according to the present invention (no keys required to be stored on the backend server B-SERV) is no longer provided.

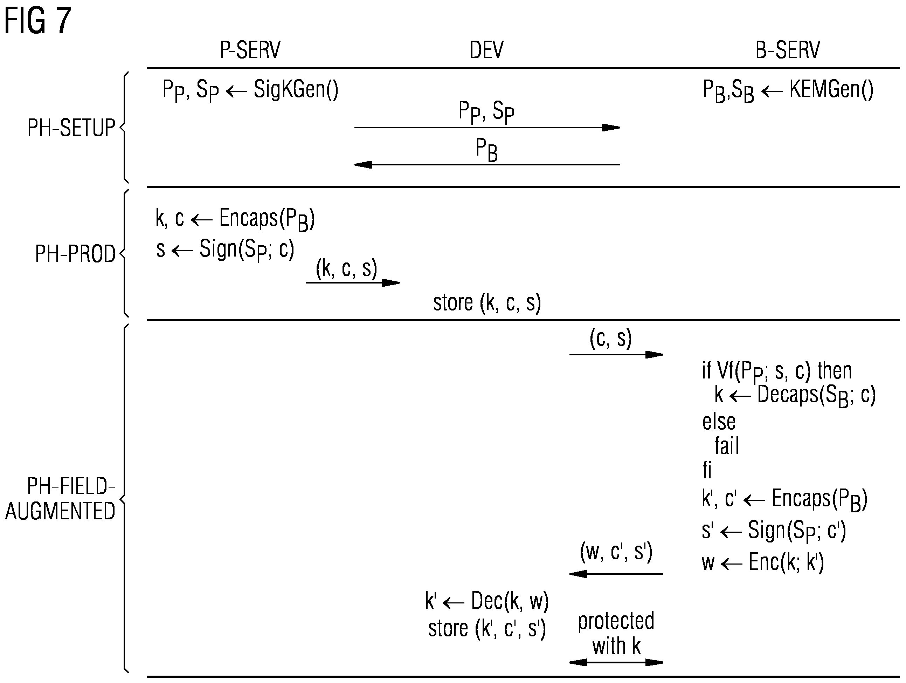

Hence, in a possible preferred embodiment of the method according to the present invention a variant of the previous protocol shown in Fig.7 is implemented that both achieves perfect forward secrecy and does not need a backend key database. This can be realized, if the backend server B-SERV provides the device DEV with a fresh cipher-text c' that encapsulates a fresh symmetric key k' after each iteration. To do this, the backend server B-SERV needs a signature key. To provide the backend-server B-SERV with such a signature key the setup phase PH-SETUP shown in Fig. 1 is adapted such that the production server P-SERV additionally sends the secret key SP to the backend server B-SERV as also shown in Fig.7. In Figs. 4, 7 this is denoted as the augmented setup phase PH-SETUP-AUGMENTED.

In the augmented filed phase PH-FIELD-AUGMENTED shown in Figs. 4, 6 the backend server B-SERV additionally employs the procedures v ← Enc (k, u) for encrypting some plain text u under the key k to obtain the cipher-text v and u ← Dec (k, v) for the corresponding decryption operation that recovers the plain text u. The procedures Enc and Dec shown in Fig.4, 5, 7 denote algorithms for encryption and decryption, respectively. In particular, the usage of Authenticated Encryption with Associated Data (AEAD) encryption/decryption algorithms is preferable. In this way, it is possible to integrity protect the data transmission. An authenticated encryption with associated data (AEAD) as employed in a possible embodiment by the method according to the present invention consists of two algorithms includes an encryption algorithm Enc and a decryption algorithm Dec.

The authenticated encryption with associated data (AEAD) comprises an encryption algorithm that, given a secret key k, a plaintext p, and optional associated data d outputs a ciphertext c and an authentication tag t. One can denote this call as (c, t) ← Enc (k, p, d), or, c ← Enc (k, p) for brevity.

The authenticated encryption with associated data (AEAD) further comprises a decryption algorithm that, given a secret key k, a ciphertext c, an authentication t, and optional associated data d outputs a plaintext, or an error if the authentication tag does not match the supplied ciphertext or associated data. For simplicity, One can denote this call as p ← Dec (k, c, t, d), or, p ← Dec (k, c) for brevity.

In particular, it is advantageous to integrity protect the tuple (w, c', s') or the tuple (k, c', s') in order to detect denial-of-service attacks on the device DEV, e.g., the attacker sending random tuples (w, c', s') to the device DEV.

The procedure for replacing the key k as agreed between the device DEV and the backend server B-SERV in Fig. 3 with a new key k' to achieve perfect forward secrecy is shown in the diagram of Fig. 4 making use of the signature secret key SP received by the backend-server B-SERV during the augmented setup phase PH-SETUP-AUGMENTED shown in Fig.7.

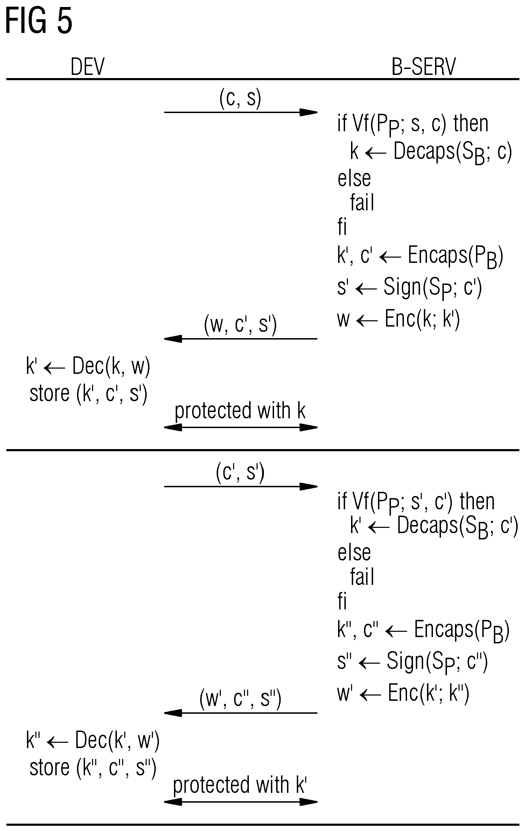

Two executions of the field phase using the augmented variant PH-FIELD AUGMENTED are depicted in Fig. 5. The first secret key k is replaced by the second secret key k' as can be seen in Fig.5.

Also in this case, the fail-routine can terminate the protocol or perform alternative actions to invalidate the correct execution of the protocol, e.g., generate a random key k that does not match the key used by the device DEV. Note that this variant has the further benefit of achieving increasing security against possible side-channel attacks on the device DEV because the keys are updated at every iteration with the backend server B-SERV.

A full version of an embodiment of the method according to the present invention using the alternative augmented setup phase PH-SETUP-AUGMENTED is depicted in Fig. 7. In a further variant of the method, the keys k and k' can be combined using, e.g., a key derivation function KDF to derive a session key.

A remarkable property of the embodiment of the method according to the present invention as shown in Fig.7 is, that the backend server B-SERV can replace the key pairs (PB, SB) and (PP, SP) at any time. The backend server B-SERV can even switch to a different KEM or signature scheme. Hence, the protocol of the embodiment shown in Fig. 7 achieves crypto agility. Crypto agility plays an important role in the switch from classical to post-quantum cryptography. For example, the backend server B-SERV can initially use a classical KEM and switch to a post-quantum KEM at a later point. Note that this would require no changes on the device DEV.

There are many further possible embodiments arising from modifications of the protocol used by the method according to the present invention.

The alternative augmented setup phase PH-SETUP-AUGMENTED can be modified such that, instead of sending the private key SP as in Fig. 7, the production server P-SERV and the backend server B-SERV can each comprise their own signature key pair. The field phase PH-FIELD can be adjusted accordingly to support different signing keys.

In a further possible embodiment of the method according to the present invention signing can be moved to a dedicated signature server SIGN-SERV.

Moreover a public key infrastructure and hence a certificate hierarchy can be used to bind the public keys to the identities of their owners.

In a possible embodiment of the method according to the present invention additional data, such as identifiers or other meta-data, can be exchanged by all involved parties of the system-

In a real-world scenario, the setup phase PH-SETUP runs exactly once, while the production phase PH-PROD is repeated for each device DEV and the field phase PH-FELD is potentially repeated for a very large number of times.

Although the setup phases and production phases, ideally take place during the initial setup of the infrastructure and device production, in practice, they can also be performed as a part of software updates on the backed server B-SERV and the device DEV. In this case, the backend server B-SERV receives a software update with KEM and signature algorithms. Then, the backend server B-SERV generates the signature keys (PP, SP), KEM keys (PB, SB), and the tuple (k, c, s) and send it to the device DEV as a part of a software update, which store it. From this point on, the device DEV can communicate with the backend server B-SERV.

Although the present invention has been described in the above by way of embodiments, it is not limited thereto, but rather can be modified in a wide range of ways. In particular, the invention can be changed or modified in various ways without deviating from the core of the invention.

Independent of the grammatical term usage, individuals with male, female or other gender identities are included within the term.

## Claims

1. A method for establishing a secure communication connection between a device (DEV) and a backend-server (B-SERV), the method comprising:
generating during a setup phase (PH-SETUP) by the backend-server (B-SERV) a KEM key pair for a key pair encapsulation mechanism (KEM) comprising a KEM public key (PB) and a KEM secret key (SB), wherein the KEM public key (PB) is sent by the backend server (B-SERV) to a production server (P-SERV) and generating during the setup-Phase (PH-SETUP) by the production server (P-SERV) a signature key pair for a signature scheme comprising a signature public key (PP) and a signature secret key (SP), wherein the signature public key (PP) is sent by the production server (P-SERV) to the backend-server (B-SERV);
encapsulating during a production phase (PH-PROD) by the production server (P-SERV) the KEM public key (PB) received from the backend-server (B-SERV) to produce a secret key (k) and a cipher text (c), wherein the produced cipher text (c) is signed with the signature secret key (SP) to produce a signature (s), wherein the produced secret key (k), the produced cipher-text (c) and the produced signature (s) are sent by the production server (P-SERV) to the device (DEV) and stored in the device (DEV); and
sending during a field phase (PH-FIELD) where the device (DEV) is deployed in the field the cipher-text (c) and the signature (s) stored in the device (DEV) to the backend-server (B-SERV) for verification by the backend-server (B-SERV) and verifying during the field phase (PH-FIELD) by the backend-server (B-SERV) the signature (s) of the cipher-text (c) received by the backend-server (B-SERV) from the device (DEV) using the signature public key (PP) received by the backend-server (B-SERV) from the production server (P-SERV) and if the verification of the received signature (s) is performed successfully decapsulating by the backend-server (B-SERV) the received cipher text (c) with the KEM secret key (SB) of the generated KEM key pair to obtain the secret key (k) shared by the backend-server (B-SERV) and the device (DEV) to derive symmetric keys for establishment of the secure communication connection between the device (DEV) and the backend-server (B-SERV).

2. The method according to claim 1, wherein the obtained secret key (k) is replaced by another second secret key (k').

3. The method according to claim 2, wherein the production server (P-SERV) sends during an augmented setup phase (PH-SETUP-AUGMENTED) additionally also the signature secret key (SP) of the generated signature key pair to the backend server (B-SERV).

4. The method according to claim 3, wherein the backend server (B-SERV) encapsulates during an augmented field phase (PH-FIELD AUGMENTED) the KEM public key (PB) of the generated KEM key pair to output the second secret key (k') and a second cipher text (c').

5. The method according to claim 4, wherein the backend server (B-SERV) signs during the augmented field phase (PH-FIELD AUGMENTED) the second cipher text (c') using the signature secret key (SP) received from the production server (P-SERV) to output a second signature (s').

6. The method according to claim 5, wherein the backend server (B-SERV) encrypts (Enc) during the augmented field phase (PH-FIELD AUGMENTED) the second secret key (k') using the first secret key (k) to output a third cipher text (w).

7. The method according to claim 6, wherein the backend server (B-SERV) transmits during the augmented field phase (PH-FIELD AUGMENTED) the third cipher text (w), the second cipher text (c') and the second signature (s') as a tuple (w, c', s') to the device (DEV).

8. The method according to claim 7, wherein the device (DEV) decrypts (Dec) during the augmented field phase (PH-FIELD AUGMENTED) the third cipher text (w) using the first secret key (k) to output the second secret key (k'), wherein the device (DEV) in particular stores the second secret key (k'), the second cipher text (c') and the second signature (s') as a tuple in a storage.

9. The method according to any of the preceding claims, wherein the produced cipher text (c) is signed during the production phase (PH-PROD) by the production server (P-SERV) and/or by a dedicated signing server to produce the signature (s).

10. The method according to any of the preceding claims,
wherein the used signature scheme comprises ECDSA, EdDSA, ML-DSA, FH-DSA, CRYSTALS-Dilithium or Falcon; and/or
wherein the key encapsulation mechanism (KEM) comprises RSA- KEM, ML-KEM, CRYSTALS-Kyber, Classic McEliece, FrodoKEM and/or post-quantum cryptography algorithms.

11. The method according to any of the preceding claims, wherein the encryption algorithm (Enc) and the decryption algorithm (DEC) used in the augmented filed phase (PH-FIELD AUGMENTED) comprise Authenticated Encryption with Associated Data (AEAD) encryption/decryption algorithms.

12. A system for establishing a secure communication connection between a device and a backend-server of the system adapted to perform a method according to any of the claims 1 to 11.

13. A backend server (B-SERV) for establishing a secure communication connection with a plurality of devices (DEVs) deployed in the field using a method according to any of the claims 1 to 11.

14. A production server (P-SERV) adapted to generate a key pair for a signature scheme used by a method according to according to any of the preceding claims 1 to 11.

15. A device (DEV) deployed in the field and adapted to establish a secure communication connection with a backend server (B-SERV) using a method according to according to any of the claims 1 to 11.
